# EUROPÄISCHE PATENTANMELDUNG

(11) **EP 4 625 811 A1**
(43) Veröffentlichungstag der Anmeldung: **01.10.2025**
(21) Anmeldenummer: 25162080.3
(22) Anmeldetag: 06.03.2025
(51) Int. Cl.: H02S 20/00, B66C 23/62

(54) **TRANSPORT- UND MONTAGEVORRICHTUNG FÜR FOTOVOLTAIKSEGMENTE UND VERFAHREN ZUR MONTAGE VON FOTOVOLTAIKSEGMENTEN**

(30) Priorität: 18.03.2024 DE 102024107693
(71) Anmelder: Vecon GmbH, 66265 Heusweiler (DE)
(72) Erfinder: Czaloun, Johann, 39012 Meran (IT); Bastuck, Matthias, 66346 Püttlingen (DE)
(74) Vertreter: Patentanwaltskanzlei Vièl & Wieske PartGmbB

(57) **Zusammenfassung**

Die Erfindung betrifft eine Transport- und Montagevorrichtung für Fotovoltaiksegmente, wobei die Transport-.und Montagevorrichtung Räder oder Raupen für die Fortbewegung im freien Feld aufweist, wobei die Transport- und Montagevorrichtung mindestens ein Fotovoltaiksegment mit mehreren an einem Seil oder Träger befestigten Fotovoltaikmodulen lagern und/oder transportieren kann. Im Rahmen der Erfindung wird vorgeschlagen, dass die Transport- und Montagevorrichtung einen Kran zum Anheben der Fotovoltaiksegmente aufweist, wobei die Transport- und Montagevorrichtung mindestens ein Montagepodest aufweist, wobei das Montagepodest Mittel zum Aufstieg und Sicherungsmittel aufweist. Die Transport- und Montagevorrichtung erlaubt eine schnelle und einfachere Montage von Fotovoltaikanlagen. Die Erfindung betrifft auch ein Verfahren zur Montage von Fotovoltaiksegmenten.

## Beschreibung

Die Erfindung betrifft eine Transport- und Montagevorrichtung für Fotovoltaiksegmente, wobei die Transport-.und Montagevorrichtung Räder oder Raupen für die Fortbewegung im freien Feld aufweist, wobei die Transport- und Montagevorrichtung mindestens ein Fotovoltaiksegment mit mehreren an einem Seil oder Träger befestigten Fotovoltaikmodulen lagern und/oder transportieren kann. Die Erfindung betrifft auch ein Verfahren zur Montage von Fotovoltaiksegmenten.

Aus dem Stand der Technik sind Fotovoltaikanlagen bekannt, bei denen die Fotovoltaikmodule an einem Seil oder einem Träger hängend angeordnet sind. Die Fotovoltaikmodule können dabei frei um eine Achse weitgehend parallel zum Seil oder Träger pendeln und somit den Windlasten ausweichen. Es sind auch Fotovoltaikmodule bekannt, die starr auf einem Träger befestigt sind. Die Seile oder die Träger können zwischen Pfosten gespannt und mit diesen fixiert sein. Die Pfosten und die Seile oder Träger bilden die Tragestruktur der Fotovoltaikanlage. Die Fotovoltaikmodule weisen Modulplatten auf. Die Modulplatten können doppelseitig angeordnete Fotovoltaikzellen oder bifaziale Fotovoltaikzellen aufweisen, die durch Glasplatten vor äußeren Einflüssen geschützt werden.

Die Montage solcher Fotovoltaik-Freiflächenanlagen ist geprägt durch kleinteilige und manuell auszuführende Schritte. So wird die Tragestrukur der Fotovoltaikmodule meist aus kleineren, manuell von zwei Personen handhabbaren Elementen zusammengesetzt, die alle lokal und direkt im Feld zusammengefügt werden. Gleiches gilt für die Montage der Fotovoltaikmodule auf den Trägern und deren Verkabelung.

Insbesondere die aktuell stark am Markt expandierenden Agrifotovoltaiksysteme sind durch hoch bauende und aufwendig zu montierende Strukturen gekennzeichnet. Der Montageaufwand nimmt daher gegenüber klassischen bodennahen Systemen massiv zu, zudem gestaltet sich der Ablauf oft gefährlich und ist sehr witterungsanfällig.

Aus dem Stand der Technik sind Montagevorrichtungen für einzelne Photovoltaikmodule bekannt.

Die CN 2 15 711 528 U offenbart eine Vorrichtung zur Montage von Photovoltaikmodulen. Die Vorrichtung zur Montage von Photovoltaikmodulen umfasst einen Hebemechanismus, eine Lagerplattform, einen Gabelmechanismus, einen mechanischen Dreharm und einen Ansaugmechanismus. Der Hebemechanismus ist mit einem Verbindungsteil versehen, und die Lagerplattform ist an der Oberseite des Verbindungsteils angeordnet. Der Gabelmechanismus ist drehbar an der Seitenwand des Verbindungsteils angeordnet. Der mechanische Dreharm ist auf der Lagerplattform angeordnet, und der Ansaugmechanismus ist an einem Ende des mechanischen Dreharms angeordnet. Der Ansaugmechanismus wird zum Aufnehmen der Photovoltaikmodule auf der Lagerplattform verwendet, und der mechanische Dreharm wird zum Befestigen der Photovoltaikmodule an der photovoltaischen Halterung verwendet

Der vorliegenden Erfindung liegt die Aufgabe zugrunde, eine verbesserte Transport- und Montagevorrichtung für Fotovoltaikmodule bereitzustellen. Insbesondere liegt der Erfindung die Aufgabe zugrunde, die Montagezeit bei gleichzeitig erhöhter Arbeitssicherheit und reduzierter Wetterabhängigkeit zu reduzieren.

Die Aufgabe wird bei einer Transport- und Montagevorrichtung für Fotovoltaiksegmente der eingangs genannten Art dadurch gelöst, dass die Transport- und Montagevorrichtung einen Kran zum Anheben der Fotovoltaiksegmente aufweist, wobei die Transport- und Montagevorrichtung mindestens ein Montagepodest aufweist, wobei das Montagepodest Mittel zum Aufstieg und Sicherungsmittel aufweist.

Ein Fotovoltaiksegment weist mehrere Fotovoltaikmodule auf, die an einem Seil oder Träger vormontiert sind. Die Fotovoltaikmodule können frei schwingend senkrecht nach unten oder in einem Winkel unter dem Seil oder Träger hängend montiert sein. Sie können auch in einem Winkel an dem Seil oder Träger montiert sein. Die Fotovoltaikmodule können bifazial ausgestaltet sein.

Die Fotovoltaiksegmente können auch starr mit einem Träger verbunden sein. Der Träger kann an einem Pfosten oder zwischen zwei Pfosten befestigt sein, wobei die Fotovoltaikmodule senkrecht zum Boden oder unter einem optimalen Winkel zur Sonnenausstrahlung ausgerichtet sind. Alternativ kann das Fotovoltaiksegment oder die Tragestruktur auch Mittel zur Solarnachführung, beispielsweise ein einachsiges Solar-Tracking-System umfassen.

Die Fotovoltaikmodule können bereits miteinander verkabelt sein. Ein Fotovoltaiksegment kann beispielsweise mehr als zwei, bevorzugt mehr als vier, besonders bevorzugt mehr als sechs Fotovoltaikmodule aufweisen.

Der Kran kann ein Auslegerkran sein. Er kann eine Säule aufweisen, der mit dem Boden der Transport- und Montagevorrichtung verankert ist. Oben an dieser Säule ist ein Ausleger befestigt, der sich um die Säule drehen kann. Dadurch hat der Auslegerkran einen kreisförmigen Arbeitsbereich. Am Ausleger ist ähnlich einem Baukran eine Laufkatze befestigt. Die Laufkatze kann einen Seilzug oder auch einen Kettenzug, der zum Anheben von Lasten ausgelegt ist, aufweisen. Vorteilhaft können die Fotovoltaiksegmente mit dem Kran manuell und ohne relevanten Kraftaufwand in der Ebene positioniert werden. Die Säule des Kranes kann eigenständig ausrichtbar sein, um diesen auch bei schwierigem Gelände immer korrekt vertikal ausrichten zu können.

Vorteilhaft lassen sich durch die Transport- und Montagevorrichtung vormontierte Fotovoltaiksegmente an ihren Aufstellungsort transportieren, wobei dort die Endmontage erfolgt. Die Fotovoltaiksegmente können an einer zentralen Stelle vormontiert werden. An dem Aufstellungsort können die Fotovoltaiksegmente mit dem Kran an ihre Position in der Fotovoltaikanlage gehoben und montiert werden. Vorzugsweise weist ein Fotovoltaiksegment sämtliche Fotovoltaikmodule einer Fotovoltaikanlage an einem Pfosten oder zwischen zwei Pfosten auf. In diesem Falle ist es vorteilhaft, dass die Transport- und Montagevorrichtung dieses Fotovoltaiksegment komplett über seine Länge einlagern kann. Die Fotovoltaiksegmente können auf dem Boden der Transport- und Montagevorrichtung liegend transportiert werden. Mehrere Fotovoltaiksegmente können dabei übereinandergelegt werden.

Die Transport- und Montagevorrichtung weist ein Montagepodest auf. Vorteilhaft können durch das Montagepodest auch relativ hoch gelegene Montagepunkte der Fotovoltaiksegmente von einem Monteur erreicht werden. Das Montagepodest kann beispielsweise die Hälfte oder Dreiviertel der Höhe des Krans, insbesondere der Höhe der Säule des Krans aufweisen. Die Montagepunkte sind insbesondere die beiden Verbindungspunkte zwischen den Fotovoltaiksegmenten und den beiden Pfosten, zwischen denen die Fotovoltaiksegmente gespannt sind. Die Fotovoltaiksegmente können auch einen einzigen oder mehrere Montagepunkte zur Verbindung mit einem einzigen Pfosten aufweisen. Die Montagepunkte liegen dabei meist am oberen Ende der Pfosten. Insbesondere bei Fotovoltaikanlagen auf landwirtschaftlichen Flächen können die Montagepunkte in einer entsprechenden Höhe über den Nutzpflanzen angeordnet sein. Die Montage umfasst sowohl die mechanische als auch elektrische Verbindung der Fotovoltaiksegmente.

Besonders vorteilhaft können die einzelnen Fotovoltaikmodule nach und während der Montage des Fotovoltaiksegments in der Fotovoltaikanlage kontrolliert, gewartet oder auch gewechselt werden. Die Transport- und Montagevorrichtung weist Mittel zum Aufstieg auf die Montagepodeste, beispielsweise Zugangstreppen und/oder Leitern zum Erreichen der Montagepodeste auf. Das Montagepodest kann auch als Lift oder Hubpodest ausgestaltet sein. Das Montagepodest kann zudem in der Horizontalen verfahrbar ausgestaltet sein. Vorteilhaft können die Montagepunkte der Fotovoltaiksegmente und/oder die einzelnen Fotovoltaikmodule mit den Montagepodesten einfach erreicht werden.

Das Montagepodest weist Sicherungsmittel auf. Die Sicherungsmittel können beispielsweise als umlaufendes Geländer oder als an Pfosten aufgehängte Kette ausgestaltet sein. Die Sicherungsmittel können lösbar mit dem Montagepodest verbindbar ausgestaltet sein. Beispielsweise kann das Montagepodest Aufnahmen für die Pfosten einer Kette oder Stangen eines Geländers aufweisen. Die Aufnahmen können Durchbrechungen zum Einstecken von Stangen sein. Vorteilhaft kann das Sicherungsmittel während des Transports der Fotovoltaiksegmente abmontiert werden. Das Sicherungsmittel kann an dem Aufstiegspunkt der Zugangstreppe unterbrochen sein. Alternativ kann ein Tor oder eine Kette zur Schließung der Unterbrechung des Sicherungsmittels vorgesehen sein. Vorteilhaft wird durch die Sicherungsmittel der Absturzschutz verbessert. Beispielsweise kann ein Monteur zusätzlich ein Gurtsystem mit dem Sicherungsmittel verbinden.

Das Bodenelement des Montagepodests kann eine rutschhemmende Oberfläche aufweisen. Beispielsweise kann eine rutschhemmende Beschichtung beispielsweise mit Kunststoff oder eine rutschhemmende Oberflächenstruktur beispielsweise mit Riffel oder Tränen vorgesehen sein. Vorteilhaft wird dadurch ein sicherer Stand bei der Montage der Fotovoltaikanlage gewährleistet.

Die Raupen oder Räder der Transport- und Montagevorrichtung ermöglichen die Fortbewegung auch in schwierigem Gelände. Die Transport- und Montagevorrichtung kann von einer Zugmaschine zum Aufstellort der Fotovoltaikanlage gezogen werden. Insbesondere in aufwendig zu erreichenden oder entlegenen Aufstellorten kann das Aufstellen der Fotovoltaikanlage allein mit der Transport- und Montagevorrichtung erfolgen. Auf landwirtschaftlichen Flächen kann Bodenverdichtung und/oder Beschädigung von Pflanzen durch zusätzliche Maschinen vermieden werden. Die Montage der Fotovoltaikanlage mit einer einzigen Transport- und Montagevorrichtung erhöht die Sicherheit. Die Montage kann mit einer einzigen schweren Maschine erfolgen.

Eine Ausgestaltung der Erfindung besteht darin, dass die Transport- und Montagevorrichtung Mittel zum Transport mehrerer Fotovoltaiksegmente nebeneinander aufweist, wobei die Fotovoltaikmodule der Fotovoltaiksegmente vertikal ausrichtbar sind.

Vorteilhaft können durch die Mittel zum Transport der Fotovoltaiksegmente diese von einem zentralen Ort der Vormontage zu dem Aufstellungsort transportiert werden. Vorteilhaft ermöglicht die vertikale Ausrichtung der Fotovoltaikmodule einen besonders sicheren und platzsparenden Transport. Die Seile oder Träger können vorteilhaft für die sichere Fixierung der Fotovoltaiksegmente beim Transport verwendet werden.

Die Mittel zum Transport der Fotovoltaiksegmente können jeweils eine horizontale Stange am vorderen und hinteren Ende der Transport- und Montagevorrichtung umfassen. Die Seile oder Träger der Fotovoltaiksegmente können auf diesen Stangen aufliegen und mit Ihnen verbunden werden. Die Stangen können Verbindungsbereiche aufweisen, die denen der Pfosten der Fotovoltaikanlage ähneln. Dadurch können die Fotovoltaiksegmente beim Transport eine ähnliche Verbindung mit den Mitteln zum Transport aufweisen, wie sie später bei der Montage mit den Pfosten erfolgt. Insbesondere bei frei schwingenden Fotovoltaikmodulen können die Mittel zum Transport Stopper umfassen, die ein Schwingen der Fotovoltaikmodule während des Transports verhindern. Die Stopper können beispielsweise Querstangen umfassen, die senkrecht zwischen den Stangen montiert sind und ein Schwingen der Fotovoltaikmodule gegeneinander verhindern. Die Querstangen können gepolstert sein und/oder Aufnahmen für die einzelnen Fotovoltaikmodule umfassen.

Eine weitere Ausgestaltung der Erfindung besteht darin, dass die Transport- und Montagevorrichtung mindestens einen Abstützfuß aufweist.

Vorteilhaft gewährt der Abstützfuß auch in schwierigem Gelände am Aufstellungsort der Fotovoltaikanlage einen sicheren Halt. Die Transport- und Montagevorrichtung kann beispielsweise zwei, drei oder vier Abstützfüße aufweisen. Mit den Abstützfüßen kann die Transport- und Montagevorrichtung beispielsweise horizontal ausgerichtet werden. Die horizontale Ausrichtung ermöglicht die sichere Verwendung des Krans und der Montagepodeste. Bevorzugt weist die Transport- und Montagevorrichtung drei Abstützfüße auf. Vor Nutzung des Kranes kann die Transport- und Montagevorrichtung über die Abstützfüße ausgerichtet und gegen Kippen gesichert werden.

Eine weitere Ausgestaltung der Erfindung besteht darin, dass die Transport- und Montagevorrichtung Antriebsmittel aufweist.

Vorteilhaft kann die Transport- und Montagevorrichtung auch ohne Zugmaschine fortbewegt werden. Die Antriebsmittel können auch den Kran und die Abstützfüße antreiben. Die Antriebsmittel können mit elektrischen oder fossilen Energieträgern betrieben werden.

Eine bevorzugte Ausgestaltung der Erfindung sieht vor, dass die Transport- und Montagevorrichtung Pfosten lagern, transportieren und/oder montieren kann.

Die Pfosten können dabei in oder an dem Boden befestigt werden. Die Pfosten können beispielsweise einen Rahmpfahl zur Verankerung im Boden umfassen. Die Pfosten können auch mit einem Fundament verbunden werden. Neben den Pfosten kann die Transport- und Montagevorrichtung auch weitere Elemente zum Bau einer Fotovoltaikanlage, beispielsweise Verbindungselemente zum Verbinden der Fotovoltaiksegmente mit den Pfosten transportieren. Vorteilhaft kann möglichst die gesamte Fotovoltaikanlage durch die Transport- und Montagevorrichtung zum Aufstellort transportiert und dort montiert werden. Vorteilhaft wird ein separater Transport der Tragestruktur der Fotovoltaikanlage vermieden.

Eine weitere Ausgestaltung der Erfindung besteht darin, dass im vorderen und im hinteren Bereich der Transport- und Montagevorrichtung jeweils ein Montagepodest vorgesehen ist.

Vorzugsweise sind die beiden Montagepodeste jeweils an den beiden Endbereichen der Transport- und Montagevorrichtung im Abstand der beiden Pfosten oder der Länge der Seile oder Träger der Fotovoltaiksegmente angeordnet. Vorteilhaft können die Fotovoltaiksegmente ohne ein aufwendiges Umstellen und Ausrichten der Transport- und Montagevorrichtung an beiden Seiten montiert werden. Dazu wird die Transport- und Montagevorrichtung annähernd parallel und neben der vorgesehenen Position des Fotovoltaiksegmentes positioniert, sodass die Montagepodeste jeweils an den vorgesehenen Anschlussbereichen der Fotovoltaiksegmente an den Pfosten positioniert sind. Mit dieser Anordnung ist es möglich, das gesamte Fotovoltaiksegment in einem Arbeitsgang zu montieren, ohne dabei die Transport- und Montagevorrichtung verstellen zu müssen. Dabei kann im gleichen Arbeitsschritt vor Montage des Fotovoltaiksegmentes auch die restliche Tragestruktur wie beispielsweise. die Pfosten und Verbindungselemente montiert werden. Dazu kann der Kran und die Montagepodeste genutzt werden, ohne die Transport- und Montagevorrichtung zu verstellen. Vorteilhaft kann die für das Aufstellen und Montieren der Fotovoltaikanlage benötigte Zeit erheblich reduziert werden.

Schließlich ist es zur Erfindung gehörig, dass die Transport- und Montagevorrichtung eine Säule aufweist, wobei die Säule eine Führung für einen Schlitten aufweist, wobei der Schlitten einen Rammhammer aufweist.

Die Säule dient als vertikale Führung für den Schlitten. Die Säule kann eine Winde oder einen Kettenzug zum Anheben des Schlittens aufweisen. Die Säule kann die Säule eines Auslegerkrans sein.

Der Rammhammer ermöglicht das Aufstellen Pfosten mit Rammpfahl der Fotovoltaikanlage. Der Schlitten dient als vertikale Führung des Rammhammers an der Säule des Krans. Der Rammhammer kann über den Kettenzug oder den Seilzug des Kranes nach oben gezogen werden und anschließend beim Fallen den Rammpfahl in den Boden treiben.

Die Erfindung betrifft auch ein Verfahren zur Montage einer Fotovoltaikanlage mit einer Transport- und Montagevorrichtung, das die folgenden Schritte aufweist:
- Bereitstellen eines vormontierten Fotovoltaiksegments,
- Transport des Fotovoltaiksegments zum Aufstellungsort der Fotovoltaikanlage mit der Transport- und Montagevorrichtung,
- Positionieren und Ausrichten der Transport- und Montagevorrichtung zwischen zwei Pfosten der Fotovoltaikanlage,
- Anheben der Fotovoltaiksegmente in die Montageposition,
- Montieren der Fotovoltaiksegmente, wobei die Transport- und Montagevorrichtung ihre Position und Ausrichtung nach dem ursprünglichen Positionieren und Ausrichten nicht ändert.

Da die Montagepodeste möglichst seitlich an den Pfosten und an den Verbindungselementen zu den Fotovoltaiksegmenten positioniert sein sollten, kann es sein, dass die Montagepodestbreiten, beziehungsweise der reduzierte Abstand zwischen den Montagepodesten, die Positionierung des Fotovoltaiksegments selbst behindern. Dazu kann es kommen, wenn sich die Montagepodeste zwischen den zum Transport eingelagerten Fotovoltaiksegmenten und ihrer Montageposition zwischen den Pfosten befinden.

Dabei kann das Fotovoltaiksegment zuerst an einem Ende seitlich annähernd an seine Montageposition gebracht wird. In einem weiteren Montageschritt wird das Fotovoltaiksegment in Feldrichtung verschoben, sodass das zweite Ende seitlich frei an einem zweiten Montagepodest verschoben werden kann. Alternativ können die Montagepodeste individuell verschoben werden. Die Fotovoltaiksegmente können auch mittels des Krans über die Montagepodeste gehoben werden.

Im Folgenden werden Ausführungsbeispiele der Erfindung anhand von Zeichnungen näher erläutert.

Es zeigen
- Fig. 1: eine perspektivische Ansicht eines Fotovoltaiksegments,
- Fig. 2: eine perspektivische Ansicht eines weiteren Fotovoltaiksegments,
- Fig. 3: eine perspektivische Ansicht einer Fotovoltaikanlage,
- Fig. 4: eine perspektivische Ansicht einer erfindungsgemäßen Transport- und Montagevorrichtung,
- Fig. 5: eine perspektivische Ansicht der Transport- und Montagevorrichtung aus Fig. 4
- Fig. 6: eine perspektivische Ansicht einer weiteren erfindungsgemäßen Transport- und Montagevorrichtung,
- Fig. 7: eine perspektivische Ansicht einer weiteren erfindungsgemäßen Transport- und Montagevorrichtung.

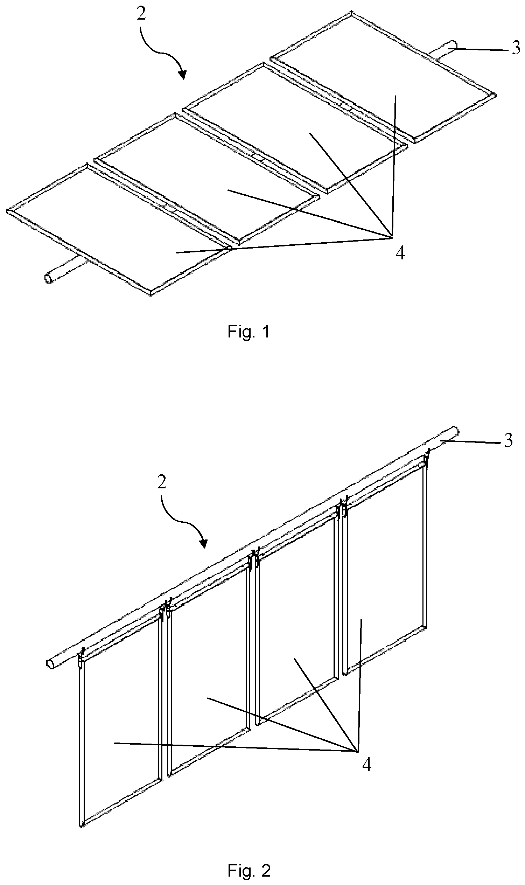

In Fig. 1 wird ein Fotovoltaiksegment 2 gezeigt. Das Fotovoltaiksegment 2 weist vier Fotovoltaikmodule 4 auf, die an einem Seil oder Träger 3 vormontiert sind. Die Fotovoltaikmodule 4 sind einem Winkel auf dem Seil oder Träger 3 montiert. Die Fotovoltaikmodule 4 können bifazial ausgestaltet sein. Die Fotovoltaikmodule 4 können bereits miteinander verkabelt sein

In Fig. 2 wird ein weiteres Fotovoltaiksegment 2 gezeigt. Das Fotovoltaiksegment 2 weist vier Fotovoltaikmodule 4 auf, die an einem Seil oder Träger 3 vormontiert sind. Die Fotovoltaikmodule 4 sind frei schwingend unter dem Seil oder Träger 3 montiert. Die Fotovoltaikmodule 4 können bifazial ausgestaltet sein. Die Fotovoltaikmodule 4 können bereits miteinander verkabelt sein.

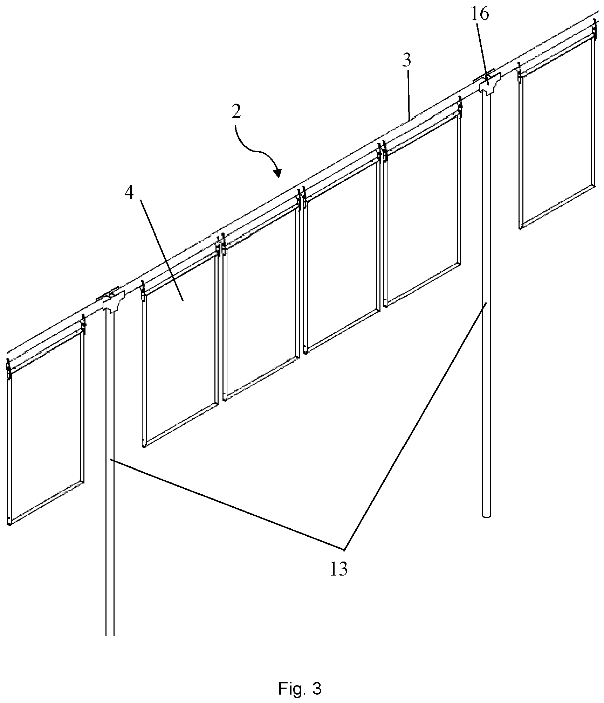

In Fig. 3 ist ein Teil einer Fotovoltaikanlage dargestellt. Die Fotovoltaikanlage weist Fotovoltaiksegmente 2, die zwischen zwei Pfosten 13 gespannt sind, auf. Die Fotovoltaiksegmente 2 sind mittels Verbindungselementen 16 mit den Pfosten 13 verbunden. Das Fotovoltaiksegment 2 weist vier Fotovoltaikmodule 4 auf, die an einem Seil oder Träger 3 vormontiert sind. Die Fotovoltaikmodule 4 sind frei schwingend unter dem Seil oder Träger 3 montiert. Die Fotovoltaikmodule 4 können bifazial ausgestaltet sein. Die Fotovoltaikmodule 4 können bereits miteinander verkabelt sein.

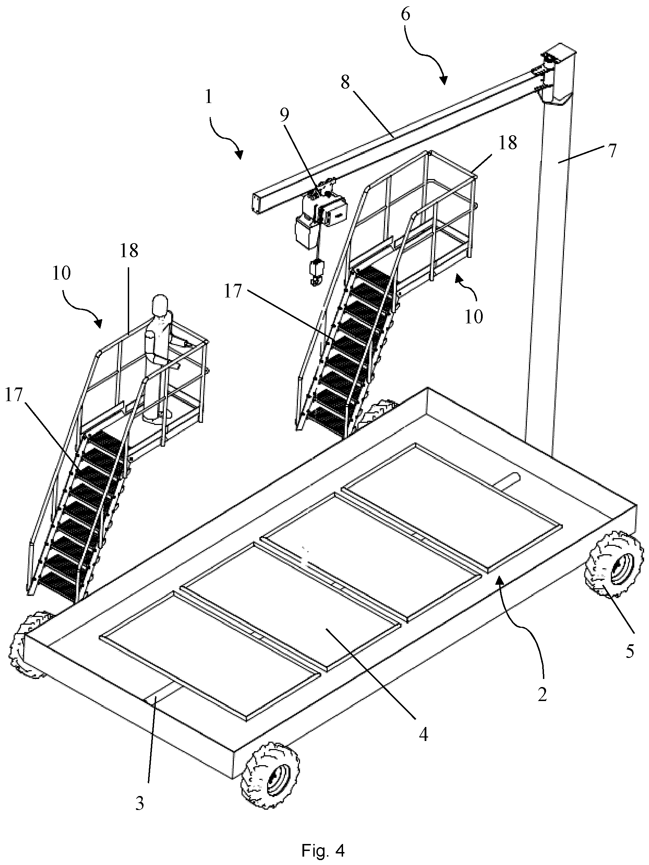

Fig. 4 zeigt eine erfindungsgemäße Transport- und Montagevorrichtung 1. In der Transport- und Montagevorrichtung 1 können Fotovoltaiksegmente 2 transportiert werden. Die Transport- und Montagevorrichtung 1 weist zur Fortbewegung Räder oder Raupen 5 auf.

Die Transport- und Montagevorrichtung 1 besitzt einen Kran 6. Der Kran 6 ist über eine Säule 7 mit dem Boden der Transport- und Montagevorrichtung 1 verbunden. Am oberen Ende dieser Säule 7 ist ein schwenkbarer Ausleger 8 befestigt. Am Ausleger 8 befindet sich eine Laufkatze 9 mit einem Kettenzug. Die Säule 7 des Kranes 6 kann eigenständig ausrichtbar sein, um diesen auch bei schwierigem Gelände immer korrekt vertikal ausrichten zu können.

Im vorderen und im hinteren Bereich der Transport- und Montagevorrichtung 1 ist jeweils ein Montagepodest 10 vorgesehen. Die beiden Montagepodeste 10 sind jeweils an den beiden Endbereichen der Transport- und Montagevorrichtung 1 im Abstand der beiden Pfosten 13 oder der Länge der Seile oder Träger 3 der Fotovoltaiksegmente 2 angeordnet. Die beiden Montagepodeste 10 können über Mittel zum Aufstieg 17 als Zugangstreppen erreicht werden. Die Montagepodeste 10 weisen Sicherungsmittel 18 auf. Die Sicherungsmittel 18 sind als umlaufendes Geländer ausgestaltet. Das Geländer ist an dem Aufstiegspunkt der Zugangstreppe unterbrochen. Alternativ kann ein Tor oder eine Kette zur Schließung der Unterbrechung des Geländers vorgesehen sein. Vorteilhaft wird durch die Sicherungsmittel 18 der Absturzschutz verbessert. Beispielsweise kann ein Monteur zusätzlich ein Gurtsystem mit den Sicherungsmitteln 18 verbinden.

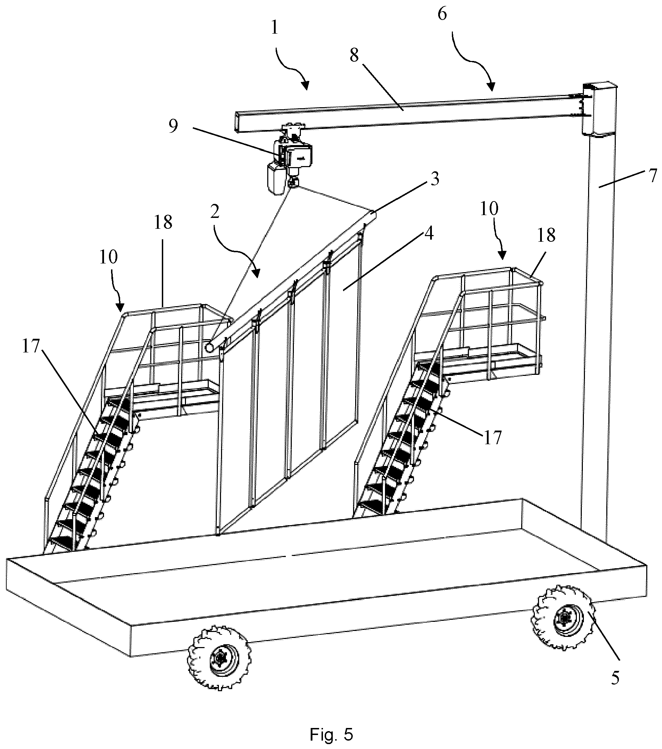

In Fig. 5 ist die Transport- und Montagevorrichtung 1 bei der Montage eines Fotovoltaiksegments 2 dargestellt. Gleiche Bezugszeichen entsprechen gleichen Merkmalen. Die Fotovoltaiksegmente 2 können mittels des Krans 6 in ihre Montageposition gehoben werden. Die Verbindung der Fotovoltaiksegmente mit den Pfosten 13 ist über die Montagepodeste 10 möglich.

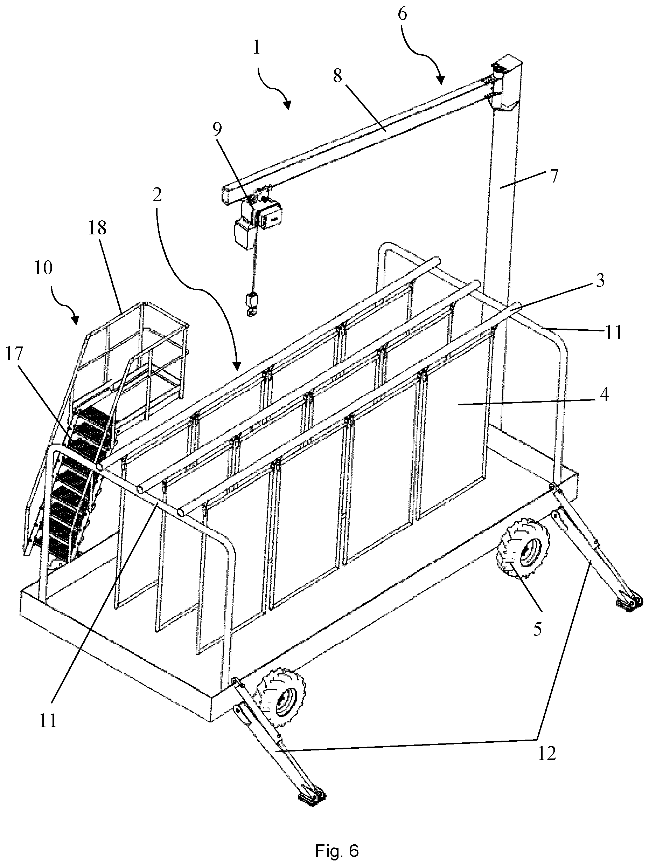

In Figur 6 ist eine weitere erfindungsgemäße Transport- und Montagevorrichtung 1 dargestellt. In der Transport- und Montagevorrichtung 1 können Fotovoltaiksegmente 2 transportiert werden. Die Fotovoltaiksegmente werden dabei durch Mittel zum Transport 11 gesichert. Die Mittel zum Transport umfassen jeweils eine Stange am vorderen und am hinteren Ende der Transport- und Montagevorrichtung 1. Die Seile oder Träger 3 der Fotovoltaiksegmente 2 können auf die Stangen aufgelegt und verbunden werden. Damit ist ein besonders platzsparender senkrechter Transport der Fotovoltaikmodule 4 möglich.

Die Transport- und Montagevorrichtung 1 weist zur Fortbewegung Räder oder Raupen 5 auf und kann mittels Abstützfüßen 12 am Aufstellort der Fotovoltaikanlage gesichert und ausgerichtet werden.

Die Transport- und Montagevorrichtung 1 besitzt einen Kran 6. Der Kran 6 ist über eine Säule 7 mit dem Boden der Transport- und Montagevorrichtung 1 verbunden. Am oberen Ende dieser Säule 7 ist ein schwenkbarer Ausleger 8 befestigt. Am Ausleger 8 befindet sich eine Laufkatze 9 mit einem Kettenzug. Die Säule 7 des Kranes 6 kann eigenständig ausrichtbar sein, um diesen auch bei schwierigem Gelände immer korrekt vertikal ausrichten zu können.

Zur Montage der Fotovoltaiksegmente 2 ist ein Montagepodest 10 mit einer Zugangstreppe 17 vorgesehen. Das Montagepodest 10 kann über Mittel zum Aufstieg 17 als Zugangstreppen erreicht werden. Das Montagepodest 10 weist Sicherungsmittel 18 auf. Die Sicherungsmittel 18 sind als umlaufendes Geländer ausgestaltet. Das Geländer ist an dem Aufstiegspunkt der Zugangstreppe unterbrochen. Alternativ kann ein Tor oder eine Kette zur Schließung der Unterbrechung des Geländers vorgesehen sein. Vorteilhaft wird durch die Sicherungsmittel 18 der Absturzschutz verbessert. Beispielsweise kann ein Monteur zusätzlich ein Gurtsystem mit den Sicherungsmitteln 18 verbinden.

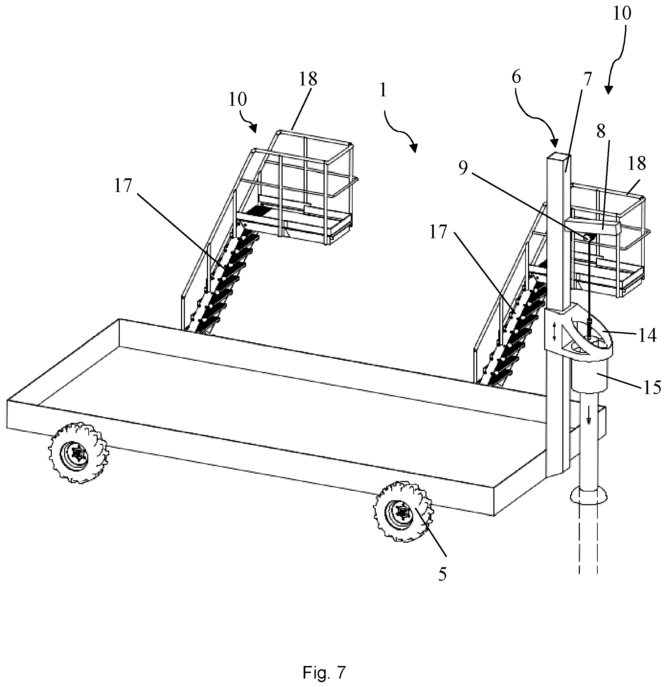

In Figur 7 ist eine weitere erfindungsgemäße Transport- und Montagevorrichtung 1 dargestellt. In der Transport- und Montagevorrichtung 1 können Fotovoltaiksegmente 2 transportiert werden. Die Fotovoltaiksegmente werden dabei durch Mittel zum Transport 11 gesichert. Die Mittel zum Transport umfassen jeweils eine Stange am vorderen und am hinteren Ende der Transport- und Montagevorrichtung 1. Die Seile oder Träger 3 der Fotovoltaiksegmente 2 können auf die Stangen aufgelegt und verbunden werden. Damit ist ein besonders platzsparender senkrechter Transport der Fotovoltaikmodule 4 möglich. Die Transport- und Montagevorrichtung 1 weist zur Fortbewegung Räder oder Raupen 5 auf.

Im vorderen und im hinteren Bereich der Transport- und Montagevorrichtung 1 ist jeweils ein Montagepodest 10 vorgesehen. Die beiden Montagepodeste 10 sind jeweils an den beiden Endbereichen der Transport- und Montagevorrichtung 1 im Abstand der beiden Pfosten 13 oder der Länge der Seile oder Träger 3 der Fotovoltaiksegmente 2 angeordnet. Die beiden Montagepodeste 10 können über Mittel zum Aufstieg 17 als Zugangstreppen erreicht werden. Die Montagepodeste 10 weisen Sicherungsmittel 18 auf. Die Sicherungsmittel 18 sind als umlaufendes Geländer ausgestaltet. Das Geländer ist an dem Aufstiegspunkt der Zugangstreppe unterbrochen. Alternativ kann ein Tor oder eine Kette zur Schließung der Unterbrechung des Geländers vorgesehen sein. Vorteilhaft wird durch die Sicherungsmittel 18 der Absturzschutz verbessert. Beispielsweise kann ein Monteur zusätzlich ein Gurtsystem mit den Sicherungsmitteln 18 verbinden.

Die Säule 7 des Krans 6 weist eine Führung für einen Schlitten 14 mit einem Rammhammer 15 auf. Alternativ kann der Schlitten 14 auch an einer zusätzlichen Säule mit Seil- oder Kettenzug geführt werden. Der Rammhammer 15 ermöglicht das Aufstellen der Pfosten 13 der Fotovoltaikanlage. Der Schlitten 14 dient als vertikale Führung des Rammhammers 15 an der Säule 7 des Krans 6. Der Rammhammer 15 wird über den Kettenzug des Krans 6 nach oben gezogen und treibt beim Fallen den Pfosten in den Boden.

### Bezugszeichenliste

- 1: Transport- und Montagevorrichtung
- 2: Fotovoltaiksegment
- 3: Seil oder Träger
- 4: Fotovoltaikmodul
- 5: Räder oder Raupen
- 6: Kran
- 7: Säule
- 8: Ausleger
- 9: Laufkatze
- 10: Montagepodest
- 11: Mittel zum Transport
- 12: Abstützfuß
- 13: Pfosten
- 14: Schlitten
- 15: Rammhammer
- 16: Verbindungselement
- 17: Mittel zum Aufstieg
- 18: Sicherungsmittel

## Patentansprüche

1. Transport- und Montagevorrichtung (1) für Fotovoltaiksegmente (2), wobei die Transport-.und Montagevorrichtung (1) Räder oder Raupen (5) für die Fortbewegung im freien Feld aufweist, wobei die Transport- und Montagevorrichtung (1) mindestens ein Fotovoltaiksegment (2) mit mehreren an einem Seil oder Träger (3) befestigten Fotovoltaikmodulen (4) lagern und/oder transportieren kann, **dadurch gekennzeichnet, dass** die Transport- und Montagevorrichtung (1) einen Kran (6) zum Anheben der Fotovoltaiksegmente (2) aufweist, wobei die Transport- und Montagevorrichtung (1) mindestens ein Montagepodest (10) aufweist, wobei das Montagepodest (10) Mittel zum Aufstieg (17) und Sicherungsmittel (18) aufweist.

2. Transport- und Montagevorrichtung (1) gemäß Anspruch 1, **dadurch gekennzeichnet, dass** die Transport- und Montagevorrichtung (1) Mittel zum Transport (11) mehrerer Fotovoltaiksegmente (2) nebeneinander aufweist, wobei die Fotovoltaikmodule (4) der Fotovoltaiksegmente (2) vertikal ausrichtbar sind.

3. Transport- und Montagevorrichtung (1) gemäß Anspruch 1 oder 2, **dadurch gekennzeichnet, dass** die Transport- und Montagevorrichtung (1) mindestens einen Abstützfuß (12) aufweist.

4. Transport- und Montagevorrichtung (1) gemäß einem der vorangegangenen Ansprüche, **dadurch gekennzeichnet, dass** die Transport- und Montagevorrichtung (1) Antriebsmittel aufweist.

5. Transport- und Montagevorrichtung (1) gemäß einem der vorangegangenen Ansprüche, **dadurch gekennzeichnet, dass** die Transport- und Montagevorrichtung (1) Pfosten (13) lagern, transportieren und/oder montieren kann.

6. Transport- und Montagevorrichtung (1) gemäß einem der vorangegangenen Ansprüche, **dadurch gekennzeichnet, dass** im vorderen und im hinteren Bereich der Transport- und Montagevorrichtung (1) jeweils ein Montagepodest (10) vorgesehen ist.

7. Transport- und Montagevorrichtung (1) gemäß einem der vorangegangenen Ansprüche, **dadurch gekennzeichnet, dass** die Transport- und Montagevorrichtung (1) eine Säule (7) aufweist, wobei die Säule (7) eine Führung für einen Schlitten (14) aufweist, wobei der Schlitten (14) einen Rammhammer (15) aufweist.

8. Verfahren zur Montage einer Fotovoltaikanlage mit einem Transport- und Montagevorrichtung (1) gemäß einer der vorangegangenen Ansprüche aufweisend die folgenden Schritte:
▪ Bereitstellen eines vormontierten Fotovoltaiksegments (2),
▪ Transport des Fotovoltaiksegments (2) zum Aufstellungsort der Fotovoltaikanlage mit der Transport- und Montagevorrichtung (1),
▪ Positionieren und Ausrichten der Transport- und Montagevorrichtung (1) zwischen zwei Pfosten (13) der Fotovoltaikanlage,
▪ Anheben der Fotovoltaiksegmente (2) in die Montageposition,
▪ Montieren der Fotovoltaiksegmente (2), wobei die Transport- und Montagevorrichtung (1) ihre Position und Ausrichtung nach dem ursprünglichen Positionieren und Ausrichten nicht ändert.
